Europäisches Patentamt

European Patent Office

Office européen des brevets

(19)

(11) EP 0 670 348 B1

(12) **EUROPEAN PATENT SPECIFICATION**

(45) Date of publication and mention
of the grant of the patent:
**15.07.1998 Bulletin 1998/29**

(51) Int Cl.6: **C08L 21/02**, D06M 15/693, C08L 3/02

(21) Application number: **95200471.1**

(22) Date of filing: **24.02.1995**

(54) **Method for manufacturing carpet, latex and granular starch product that can be used therefor, and carpet**

Verfahren zur Herstellung von Teppich, Latex und verwendetes körniges Stärkeprodukt und Teppich

Méthode de fabrication de tapis, latex et produit d'amidon granulair utilisé, et tapis

(84) Designated Contracting States:
**BE DE FR GB IT NL**

(30) Priority: **25.02.1994 NL 9400294**

(43) Date of publication of application:
**06.09.1995 Bulletin 1995/36**

(73) Proprietors:
- **Coöperatieve Verkoop- en Productievereniging van Aardappelmeel en Derivaten 'AVEBE' B.A.**
  **NL-9641 JA Veendam (NL)**
- **Ditar B.V.**
  **NL-2984 AE Ridderkerk (NL)**

(72) Inventors:
- **Heida, Albert Siebren**
  **NL-3319 RD Dordrecht (NL)**
- **Meijer, Henk Jaap**
  **NL-9761 DA Groningen (NL)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**US-A- 3 779 857**          **US-A- 4 138 518**

## Description

The invention relates to a method for manufacturing carpet containing threads or fibers of a natural and/or synthetic material that are fixedly connected with an underlayer. The invention also relates to a latex and a granular starch product that can be used therefor, and to carpet.

One or more sublayers of the underlayer of carpet is (are) often manufactured from a latex of a polymer, wherein sometimes relatively large amounts of filler are included. As a filler, inorganic fillers are mostly used, such as chalk (calcium carbonate), clay and quartz.

From US-A-3 779 857 it is known to manufacture underlayers of carpet from a polymeric latex containing large amounts of an inorganic pigment and to which a ternary mixture of granular starch, urea and borax is added in an amount up to 40 parts by weight per 100 parts by weight of dry polymer present in the latex. During the drying and curing process of the layer formed from the latex, the granular starch gelatinizes.

US-A-4 104 213 describes the application of a special granular starch product as a thickening agent and to partly replace the polymer in latices. These latices can be used for forming carpet underlayers, with large amounts of calcium carbonate being incorporated into the latex as inorganic pigment.

US-A-4 711 794 discloses latex compositions that may serve for the manufacture of carpet underlayers and, in that case, contain large amounts of inorganic filler. By replacing 5-30% of the natural or synthetic binder present in the latex by a mixture consisting of starch swelling in cold water, chemically modified granular starch and an alkaline substance for reducing the gelatinization temperature of the granular starch, it is provided that the layer formed from the latex adheres to textile products more properly.

Finally, from US-A-4 138 518 it is known to include granular starch in a latex for manufacturing carpet underlayers. During the manufacturing process, the granular starch is gelatinized and the gelatinized product promotes the mutual adhesion between the different layers. In order to have the gelatinization take place more easily, so-called starch sensitizers are added, which reduce the gelatinization temperature. It is also described that granular starch that has not gelatinized does not contribute to the intended improvement of the adhesion between the different layers. As a matter of fact, the carpet underlayers described contain the conventional, typically relatively large amounts of inorganic filler.

The presence of large amounts of inorganic filler in the underlayer of carpet is increasingly experienced as disadvantageous. The most important drawback is that when old carpet is destructed through incineration, large amounts of ash residues are left, which are environmentally harmful in one way or another. Other drawbacks are in particular due to the relatively great density of inorganic fillers, as a consequence of which latices containing these fillers have a great density as well and are difficult to handle, and the carpet manufactured is heavy, which in turn complicates the transportation and laying of the carpet.

The object of the invention is to provide an efficient method for manufacturing carpet, wherein, for forming at least one of the composite layers of the underlayer of the carpet, a pourable mixture is used having a high content of organic material, which for a considerable part consists of specific organic fillers.

Another object of the invention is to provide such a method wherein the organic fillers applied constitute the total or almost the total amount of filler present in the relevant layer.

Still another object of the invention is to replace the known inorganic fillers in carpet underlayers by specific organic fillers that are considerably lighter and, upon incineration of old carpet, leave behind only few ash residues.

According to further objects of the invention, a latex and a granular product are provided that can be used for manufacturing carpet underlayers.

Also, according to the invention, carpet is provided wherein specific organic fillers constitute the total or almost the total amount of filler present in at least one of the layers and preferably in all layers (insofar as it concerns layers that normally include filler) that together form the underlayer of the carpet.

Other objects and advantages of the invention will appear from the following description and examples.

The method for manufacturing carpet according to the invention is characterized in that at least one layer that forms part of the underlayer is formed from a latex of a natural or synthetic polymer wherein a granular starch product is included, the weight ratio of the granular starch product to the polymer of the latex (calculated on the dry substance) being in the range of 60/100 - 300/100 and the water content being chosen or set such that the weight ratio of the granular starch product to water is 60/100 - 200/100, which latex is foamed by means of a surfactant, and the layer formed from the foamed latex is dried and cured, while the granular structure of the starch product is retained completely or almost completely. Hence, the content of organic material formed by the polymer of the latex and the granular starch product (including the water present therein) is very high and is at least 80 parts by weight per 100 parts by weight of water present in the pourable composition.

In accordance with a further embodiment, the invention relates to a latex of a natural or synthetic polymer that can be used for manufacturing carpet underlayers and that contains a granular starch product and a swelling inhibitor therefor, the weight ratio of the granular starch product to the polymer of the latex (calculated on the dry substance) being in the range of 60/100 - 300/100 and the weight ratio of the granular starch product to water being in the range of 60/100 - 200/100, and the latex also containing a surfactant and, optionally, preservatives preventing attack on or decomposition of the granular starch product.

In accordance with still another aspect of the invention, a granular starch product is provided that is suitable for being added to a latex for manufacturing carpet underlayers and that contains a swelling inhibitor in an amount of at least 1 part per 100 parts of starch product, and also a surfactant in an amount of at least 0.5 part per 100 parts of starch product.

The invention also relates to carpet containing threads or fibers of a natural and/or synthetic material that are fixedly connected with an underlayer, a granular starch product being included as filler in at least one layer that forms part of the underlayer and contains a natural or synthetic polymer, the weight ratio of the granular starch product to the natural or synthetic polymer being in the range of 60/100 - 300/100, and the granular starch product forming the total or almost the total amount of filler present in the relevant layer.

The granular starch product to be applied according to the invention has a density that is only approximately half the density of the inorganic fillers used up to now, such as chalk having a density of 2.8 kg/dm$^3$ as opposed to potato starch having a density of approximately 1.4 kg/dm$^3$. As a result, the weight of the carpet per square meter is reduced and at the same time a considerable saving of raw material is realized.

Granular starch product has further advantages, because there are good techniques for preserving starch in an efficient manner, which also has a favorable effect on the preservation of the carpet in its entirety and in particular also on the preservation of the carpet fibers themselves, when they contain in particular whool, cotton or other natural products.

Reference has already been made to an important advantage in respect of the incineration of carpet, when it contains granular starch products rather than inorganic fillers: the ash residue will then be only approximately 10% of the ash residue left after the incineration of carpet having inorganic fillers. In addition, the incineration of starch products involves the release of heat that can be usefully applied, whereas during the incineration of carpet containing chalk as a filler less heat is released, because heat is required for converting the chalk into calcium oxide and carbon dioxide. Moreover, the incineration of granular starch products leaves behind only trace amounts of heavy-metal pollutions in comparison with the amounts of heavy-metal pollutions produced by chalk.

Finally, it is pointed out that granular starch products belong to the group of the natural hydrophylic polymers. When applied in accordance with the invention, these fillers, compared with synthetic organic polymers, such as polyethene in granular form, have the advantage that they are more environmentally friendly and can optionally be biologically degraded. Also, unlike the use of synthetic polymers, the application of these fillers does not involve electrostatic charging, as a result of which special precautions such as earthing can be omitted.

When in this specification and in the claims the weight of the granular starch product is mentioned, the weight including the water retained in the granule is meant. Potato starch, for instance, by nature contains approximately 18-20% water and due to the absorption of water from the aqueous medium wherein it is used, this water content may further increase slightly, depending on the degree of swelling. It is true that during the drying of a layer containing granular starch product, by heating at a temperature that is commonly well above 100°C, the water enclosed in the granule is released, but shortly afterwards, water is gradually absorbed into the granule again, as a result of which the relevant layer of the eventual carpet contains granular starch product having water retained in the granule.

The amount of water in the aqueous medium or the latex wherein the granular starch product is included, is the amount of water excluding the above-mentioned water that is retained in the granule of the starch product.

Finally, by the amount of natural or synthetic polymer, for instance an elastomer, which forms the base of the latex and is later the binder component in the layer formed, the amount of that polymer calculated on the dry substance is meant.

Before discussing at length the essence of this invention, it seems useful to specify some types of carpet so as to obtain a clearer view of the field of application of the invention.

In tufted carpet, yarns in the form of threads or fibers are provided in a primary backing. This primary backing mostly consists of ribbon fabric, for instance of polypropene or jute, or of a web, for instance of polypropene or polyester. This assembly is referred to as the cloth and to anchor the pile in the primary backing and impart stability to the carpet, a precoat is applied. This precoat mostly consists of latex plus filler, hitherto an inorganic filler such as chalk, clay and quartz. Depending on the method of preparation and the requirements, the precoat mixture in liquid condition consists for approximately 20-40% of water. The precoat can be licked against the bottom or back side of the cloth with a lick-roller. Another manner of application is via a so-called foam table. In this case, the precoat mixture is blended with air by means of a foam mixer, causing a decrease of the specific weight and enabling controlled reduction of the yield per m$^2$. In accordance with this method, the precoat is applied to the bottom or back side of the cloth from above. Regardless of the manner of application, the cloth is impregnated with the precoat mixture to a greater or lesser extent. After application of the precoat, the carpet is conveyed through a drying oven at a rate of 1-40 m/minute and at a temperature of generally between 120 and 180°C. The moist air is discharged via a chimney. The weight of the precoat after drying is usually between 200 and 700 g/m$^2$.

Typically, a secondary backing is applied to the precoat. This secondary backing serves to enhance the stability and comfort and may consist of jute fabric, synthetic fabric or foam. The application of a foam backing from a foamed latex wherein filler is included practically always takes place via the above-described foam table method, mostly in line after the application of the precoat. Drying and vulcanizing of the foam backing take place in a second oven. Depending on the chosen circumstances, the feed-through rate may vary within wide limits, but is usually between 2 and 30 m/minute. The temperature in the oven is usually in the range of 120-180°C. The thickness of the foam backing may vary greatly, depending on the type of carpet, but is typically in the range of 2-6 mm. Commonly, after drying, the foam backing has a lower weight than the precoat. In the case where jute fabric or synthetic fabric is used for forming the secondary backing, that fabric is glued to the precoat via a layer of glue and, optionally, partly pressed into the precoat.

In the case of needle felt carpet, natural and/or synthetic fibers are mechanically needle-punched with each other. To impart stability to needle felt carpet and to anchor the fibers, a precoat from a latex which may include a filler is applied. Typically, a secondary backing is further applied, which may or may not contain filler. The secondary backing serves to enhance the comfort and/or to provide the carpet with antiskid properties. The application of the precoat and the secondary backing takes place in the same manner as described hereinabove with respect to tufted carpet. In all cases, the carpet is dried in a drying oven at temperatures commonly in the range of 120-180°C.

In a woven carpet, in most cases only a precoat is applied, serving to impart stability and cutting strength to the carpet, and for additional pile anchorage. Sometimes, another secondary backing of jute is applied. The precoat is mostly formed from a latex wherein a small amount of filler is included and which is nearly always applied according to the lick-tray method.

Hence, the essence of the invention is that in filler-containing coating layers as described hereinabove, the inorganic filler used hitherto is largely or preferably completely replaced by a granular starch product. The starch product can be of any origin, for instance potatoes, maize, wheat, tapioca, etc. As starch product, native starch is commonly used, but modified starches can be used as well, provided that the granular structure is retained. As examples of modified starches, dextrins, acid-modified starches, oxidized starches, starch esters, starch ethers and cross-linked starches can be mentioned. Multiply-modified starches can be used as well, for instance starch esters or ethers that are also cross-linked. Preferably, a starch product is used whose granular size (on weight average) is in the range of 20-50 μm, because this granular size fairly well corresponds to the granular size of the inorganic fillers that have hitherto been incorporated into carpet underlayers. Potato starch, whose amylopectin content may vary from 75 to 100%, has a granular size that is within that range and for that reason, according to the invention, an optionally modified potato starch is preferably used.

According to the invention, the granular starch product is added to a latex of a natural or synthetic polymer suitable for manufacturing one or more layers of the underlayer of carpet, such as the above-described precoat and the secondary backing. Suitable latices are latices of vinyl resins, (meth)acrylic resins, natural rubber, styrene resins, butadiene resins and combinations thereof. Often, elastomeric resins are used. Such latices have frequently been described in the prior art and need not be further explained. The latices employed normally contain between 40 and 70% by weight natural or synthetic polymer and hence between 60 and 30% by weight water. Typical latices contain natural or synthetic polymer and water in a weight ratio of 66/34 or of 50/50, the 50/50 latex normally being used for producing the precoat and the 66/34 latex for producing a secondary backing.

The granular starch product is added to the latex in a weight ratio to the polymer of the latex that is at least 60/100. When that ratio is less than 60/100, there is the risk that the granular starch product will gelatinize during the drying of the formed layer at a raised temperature, causing the intended effect of filler to be lost. In addition, the filler effect is of course smaller according as less filler is present in the layer. The upper limit of the weight ratio granular starch product/polymer is in fact determined by the desired quality, because when that ratio is very great, the strength of the formed layer and accordingly the durability of the carpet decreases. Moreover, the carpet then becomes more vulnerable to liquids, in particular when the carpet is to be cleaned or when water or a water-containing liquid is accidentally spilled on the carpet. For this reason, the weight ratio of the granular starch product to the polymeric binder is 300/100 at the most.

It is of essential importance that the latex containing the granular starch product have the proper water content, because the water content should be chosen such that the granular structure of the starch product is completely or largely retained. In order to realize this, the weight ratio of the granular starch product to the water is chosen or set in the range of 60/100 - 200/100. When this ratio is less than 60/100, the chances of gelatinization during the drying and curing process of the layer increase. At a ratio greater than 200/100, the latex becomes relatively thick and, as a result, difficult to process. In that case, dilution should typically be applied, yielding a manageable product again whose water content lies within the range indicated. Preferably, the weight ratio of the granular starch product to water is in the range of 100/100 - 160/100.

A very important additive is a so-called swelling inhibitor, which prevents the granular starch product, in particular during drying through heating, from swelling unduly and even bursting open or gelatinizing. Suitable swelling inhibitors are particular inorganic salts, such as sodium chloride and sodium sulfate, and particular organic compounds, preferably having water-binding properties, such as urea. Organic compounds are preferred, because they yield the best results and do not leave behind any incineration ash. The swelling inhibitor is normally applied in an amount of at least 1 part by weight per 100 parts by weight starch product. The desired amount depends on the intended effect and can readily be determined by a skilled person. The more swelling inhibitor is applied, the stronger the swelling is suppressed, which means that the granule remains smaller and a higher degree of filling can be utilized. A stronger suppression of the swelling also results in a higher gelatinization temperature, allowing the formed layer to be dried at a higher temperature and hence faster. Also for another reason it is important that no or hardly any gelatinization of the starch product occurs, namely to prevent bacteria and fungi from attacking the starch product in the formed layer. In fact, a starch product having a granular structure is little sensitive to bacterial and fungal attack. Finally, it is observed that cross-linked starch products are normally considerably less sensitive to swelling than non-cross-linked ones, as a consequence of which the use of cross-linked granular starch products requires considerably less swelling inhibitor, if at all.

Further, the presence of surfactants is of great importance. The starting latex itself already contains surfactants, but in practice, during the formation of carpet layers according to the invention, extra surfactants are nearly always added in order to effect foaming of the latex and hence save weight. According to the invention, surfactants - also referred to as (foaming) soaps - are normally used that contain hydrocarbon residues as hydrophobic residues. Preferably, these residues are not linear alkyl residues, because linear alkyl residues complex with the granular starch product, as a consequence of which a considerably larger amount of surfactant is sometimes required for obtaining the intended foaming. Hence, according to the invention, surfactants are preferably used that contain branched alkyl residues and/or arylalkyl residues and/or aromatic residues. An example of such surfactant is sodium-2-ethylhexanolsulfate. Depending on the nature of the substance used and of the intended foaming, the amount of surfactant to be applied can readily be determined by a skilled person. When the surfactant contains no linear alkyl residues, 0.5 to 2 parts (calculated on the dry substance) thereof is normally applied per 100 parts latex or per 100 parts granular starch product. When a surfactant having linear alkyl residues, such as sodium lauryl sulfate or sodium oleate, should nevertheless be used, because other surfactants combine poorly with the selected latex, an amount thereof is required that is sometimes 5 to 10 times larger than the amount that would suffice in the case where a surfactant without linear alkyl residues is used.

As further additives, preservatives preventing decomposition of or attack on the granular starch product can be mentioned in particular. Two types can be distinguished here, namely preservatives which protect the latex wherein the granular starch product is included against attack by bacteria, and preservatives which protect the eventual carpet against fungoid growth. Preservatives of the former type can be selected from the known bactericides, such as 1,2-benzisothiazolin-3-one, and are normally applied in an amount of 0.02 or more parts, according to the need, per 100 parts granular starch product, whereas preservatives of the latter type can be selected from the known anti-fungal substances, for instance mercaptobenzothiazole compounds, and are normally applied in an amount of at least 1 part per 100 parts granular starch product. Both types of perservative are preferably used in a form that is free of heavy metals, to prevent harmful waste matter from being left when for instance old carpet is incinerated. The above-indicated amounts of the preservatives relate to the form that is free of heavy metals.

The latex for use according to the invention can be prepared in various manners. When a swelling inhibitor is employed, this swelling inhibitor is preferably added to the starting latex first, enabling it to serve its purpose immediately when the granular starch product is introduced. Blending the latter homogenously with the latex requires much energy and a vigorous mixing operation should be performed. After all, it involves the introduction of a large amount of a solid substance, and the latex is rendered considerably thicker thereby. For this reason, the surfactant is preferably introduced only later, as it would otherwise render the homogenous blending of the granular starch product with the latex more difficult, if not impossible, due to powerful foaming. In principle, the preservatives can be added at a randomly chosen moment. The blending methods and the mixers to be used are of course chosen as a function of the nature of the blending operation to be performed. As stated before, admixing the granular starch product requires considerable energy and hence stronger agitation than when the other components are being introduced.

The latex wherein the granular starch product is included, normally in combination with a swelling inhibitor, and wherein a surfactant and, optionally, preservatives are also present, constitutes a commercial product that can be supplied to the carpet manufacturer, so that he only needs to foam the product to the desired degree before forming the latex, ready for use, into a layer of the desired thickness according to known techniques, which layer is subsequently dried and cured, as described hereinabove as well.

Another important aspect of this invention consists in providing a ready-made mixture, for instance in semi-dry form, of granular starch product, swelling inhibitor, surfactant and optionally preservatives, which mixture can be sold as such and, when used, dosed by the carpet manufacturer in a latex selected by him to obtain a latex that is ready for use for manufacturing one or more layers of a carpet according to the invention. That mixture can for instance be prepared by blending a solution of the swelling inhibitor, the surfactant and optionally the preservatives in a mixer with the granular starch product or by depositing such solution on the granular starch product in accordance with spraying or spray-drying techniques known from, inter alia, the detergents industry.

The favorable effects of the invention have already been mentioned above. They can be summarized in the following terms: a carpet that is environmental-friendly in various respects and that has a good quality and a great diversity of possibilities when manufactured.

The invention is further explained hereinbelow on the basis of a number of examples.

Example 1

A mixture was prepared of the following composition in parts by weight:

|  | dry | wet |
|---|---|---|
| carboxylated styrene/butadiene latex (Baystal T 425C, Bayer A.G.) | 100 | 189 |
| water |  | 9.00 |
| urea | 1.00 | 2.50 |
| potato starch | 102 | 120 |
| 1,2-benzisothiazolin-3-one, Na salt (BIT) | 0.04 | 0.20 |
| mercaptobenzothiazole (MBT) | 1.50 | 3.00 |
| sodium-2-ethylhexanolsulfate | 0.80 | 2.00 |
| polyacrylate thickener (S 222, Ditar B.V.) | 0.10 | 1.00 |
|  | 205.44 | 326.70 |

The difference between "wet" and "dry" in the mixture consists of water, as it in fact does in the further examples, and, in the case of potato starch, is the water that is retained in the starch granules. The mixture has a solid content of approximately 63%. The mixture was prepared by first adding water and then urea to the latex and by subsequently distributing the potato starch homogenously in the latex with vigorous agitation. Subsequently, BIT, MBT and the soap (sodium-2-ethylhexanolsulfate) were introduced and, finally, the polyacrylate thickener was added to bring the mixture to the proper viscosity. The resulting mixture, that can be sold as a commercial product, was foamed immediately before use and applied, via a lick-roller, to a cloth of tufted carpet in an amount of 705 g (wet)/m$^2$. A secondary backing was calendered on the formed layer. Subsequently, the carpet was dried at a feed-through rate of 12 m/minute in a drying oven having a length of 50 m. In that drying oven, varying air temperatures were used, lying in the range of 120-180°C. The total weight of the thus obtained carpet was 1075 g/m$^2$.

In the carpet thus manufactured, the potato starch has retained its granular structure practically completely. The bond between the different layers of the carpet is excellent and the carpet possesses a great durability. In particular, it is also well resistant to fungal attack.

Carpet manufactured as described hereinabove was compared with carpet manufactured utilizing a known mixture with chalk (calcium carbonate) as filler. To obtain an equal degree of filling, the solid content of this known mixture was approximately 80%. In spite of the lower solid content of the mixture according to the invention, i.e. approximately 63% and hence more water present, the machine speed when using the mixture according to the invention could still be kept at the same value as in the case where the known mixture is used, because less of the mixture according to the invention needs to be applied. The total weight of the carpet produced with the known mixture was in fact 1355 g/m$^2$. This means a saving in weight of 1355 - 1075 = 280 g/m$^2$ or of more than 20% when using a mixture with potato starch in granular form according to the invention.

Further, the ash residue content was determined by ashing the carpet according to the invention and the comparison carpet at 959°C. The results were as follows:

|  | invention | comparison |
|---|---|---|
| ash residue content | 1.7% (18.3 g/m$^2$) | 22% (298 g/m$^2$) |

Finally, the following values of the combustion heat were calculated:

|  | invention | comparison |
|---|---|---|
| combustion heat (per m$^2$ carpet) | + 10,518 Kcal | + 8,958 Kcal |
| combustion heat (per kg dry filler-containing layer) | + 7,160 Kcal | + 2,103 Kcal |

Example 2

A mixture was prepared having the following composition in parts by weight:

|  | dry | wet |
|---|---|---|
| styrene/butadiene foam latex of a high solid content (Bunatex SL 3910, Chemische Werke Hüls) | 100 | 150 |
| potassium hydroxide | 0.20 | 2.00 |
| urea | 1.00 | 2.50 |
| disodium-N-alkylsulfosuccinamate | 5.00 | 14.50 |
| potato starch | 85 | 100 |
| 1,2-benzisothiazolin-3-one,Na salt (BIT) | 0.04 | 0.20 |
| polymerized 2,2,4-trimethyl-1,2-dimethyl-quinoline (antioxidant) | 1.00 | 2.00 |
| methylcellulose thickener (Methocel, Dow) | 0.03 | 1.00 |
| water |  | 11.00 |
| vulcanization paste D140 GUT (Ditar B.V.) | 5.30 | 10.00 |
|  | 197.57 | 293.20 |

The difference between "wet" and "dry" in the mixture consists of water and, in the case of potato starch, is the water that is retained in the starch granules. The mixture has a solid content of approximately 67%. The mixture was prepared by first adding potassium hydroxide, urea, succinamate soap, antioxidant and BIT to the latex and by subsequently distributing the potato starch in the latex with vigorous agitation. After the addition of the required amount of water, the mixture was brought to the desired viscosity with methylcellulose. The thus prepared mixture is a commercial product. Immediately before use, the vulcanization paste D140 GUT was added and the latex mixture was foamed to 130 g/l. Via the foam table, the foamed mixture was applied in an amount of 270 g (wet)/m$^2$ to needle felt precoated with latex. The thus coated needle felt was dried at a feed-through rate of 10 m/minute and vulcanized in a dying oven having a length of 35 m. In that drying oven, varying air temperatures were employed, lying in the range of 120-180°C. The soap present in the mixture provides a stable foam which during drying vulcanizes to form a non-gel foam backing.

In the thus produced carpet, the potato starch has retained its granular structure almost completely. The bond between the different layers of the carpet is excellent and the carpet possesses a great durability. In particular, it is also well resistant to fungal attack. The ash residue content is considerably lower, whereas the combustion heat is higher than in the case of a comparison carpet with usual inorganic fillers.

In an analogous manner as described above, instead of a non-gel foam backing, a gel foam backing was now formed on needle felt precoated with latex. The mixture used had the same composition as described above, except that a different soap was used, i.e. potassium oleate in an amount of 15.00 parts wet = 3.00 parts dry, and that instead of 11 parts water only 7 parts water were added. Also, a gelling agent on the basis of sodium silicofluoride (type SNSF, Ditar B.V.) was now injected into the foamed latex mixture in an amount of 3.00 parts (wet) = 0.75 part (dry). This gelling agent acts on the oleate under the influence of infrared heat before the drying and vulcanizing of the foam layer, rendering it insoluble and causing the foam to gel. During subsequent drying, the thus formed gel structure is vulcanized.

The thus produced carpet having a gel foam backing possesses the same good qualities and advantages as pointed out hereinabove in respect of the carpet having a non-gel foam backing. Instead of the above-mentioned gelling agent, the same amount (3 parts wet = 0.75 part dry) of a gelling agent on the basis of ammonium acetate can also be used, i.e. type S293, Ditar B.V. In the case of a gel foam backing, the foam latex used can be replaced completely or partly by natural latex.

Example 3

Urea, BIT, MBT and sodium-2-ethylhexanolsulfate were mixed together in the amounts as indicated in Example 1 (wet), to form a premix. This premix (7.7 parts wet), which can be sold as such, was blended in a Nauta mixer with potato starch (102 parts dry; 120 parts wet) to form a semi-dry intermediate product, i.e. treated potato starch granules, that can be packed in bags and stored for 2 months and longer.

The carpet manufacturer can admix the above-described intermediate product in a latex, after water has been added thereto, in the ratios given below and can finally add a polyacrylate thickener, taking the following mixing ratios in parts by weight into account:

|  | dry | wet |
|---|---|---|
| carboxylated styrene/butadiene latex (Baystal T 425C, Bayer A.G.) | 100 | 189 |
| water |  | 9.00 |
| treated potato starch granules | 105.34 | 127.7 |
| polyacrylate thickener (S 222, Ditar B.V.) | 0.10 | 1.00 |
|  | 205.44 | 326.70 |

The thus produced mixture was used in an analogous manner as described in Example 1 for the manufacture of carpet having the same favorable properties and advantages as the carpet described in Example 1.

Example 4

A vulcanization/soap-paste was prepared by mixing together, in the amounts (wet) indicated in Example 2, the components mentioned in Example 2 for preparing a mixture for producing a non-gel foam backing, except the latex, the starch and the water. As a commercial product, the thus produced paste can be mixed with latex by the carpet manufacturer and subsequently, potato starch can be admixed and water can be added, in accordance with the specifications given below, wherein the amounts of parts by weight are:

|  | dry | wet |
|---|---|---|
| styrene/butadiene foam latex of a high solid content (Bunatex SL 3910, Chemische Werke Hüls) | 100 | 150 |
| vulcanization/soap-paste | 12.57 | 32.20 |
| potato starch | 85 | 100 |
| water |  | 11.00 |
|  | 197.57 | 293.20 |

In the same manner as described in Example 2, the thus produced mixture was processed into a non-gel foam backing in needle felt carpet. This carpet possessed the same good properties as described in Example 2.

A vulcanization/soap-paste was prepared by mixing together, in the amounts (wet) indicated in Example 2, the components mentioned in Example 2 for preparing a mixture for producing a non-gel foam backing, except the latex, the starch and the water. As a commercial product, the thus produced paste can be mixed with latex by the carpet manufacturer and subsequently, potato starch can be admixed and water can be added, in accordance with the specifications given below, wherein the amounts of parts by weight are:

|  | dry | wet |
|---|---|---|
| styrene/butadiene foam latex of a high solid content (Bunatex SL 3910, Chemische Werke Hüls) | 100 | 150 |
| vulcanization/soap-paste | 10.57 | 32.70 |
| potato starch | 85 | 100 |
| water |  | 7.00 |
|  | 197.57 | 289.70 |

The thus produced mixture was foamed and in the foamed mixture a gelling agent was further injected, whereupon the mixture was processed into a gel foam backing in needle felt carpet, in the same manner as described in Example 2. The carpet produced also possessed the same good properties as described in Example 2.

Example 5

A soap paste was prepared by mixing together, in the amounts (wet) indicated in Example 1, the components mentioned in Example 1, except the latex, the water, the starch and the polyacrylate thickener. As a commercial product, the resulting soap paste can be mixed with latex by the carpet manufacturer after water has been added thereto, whereupon starch can be admixed and polyacrylate thickener can further be added, in accordance with the specifications given below, wherein the amounts of parts by weight are:

| | dry | wet |
|---|---|---|
| carboxylated styrene/butadiene latex (Baystal T 425C, Bayer A.G.) | 100 | 189 |
| water | | 9.00 |
| soap paste | 3.34 | 7.70 |
| potato starch | 102 | 120 |
| polyacrylate thickener (S 222, Ditar B.V.) | 0.10 | 1.00 |
| | 205.44 | 326.70 |

The thus produced mixture was used for manufacturing carpet in the same manner as described in Example 1. The carpet possessed the same good properties as described in Example 1.

Example 6

A mixture was prepared having the following composition in parts by weight:

| | dry | wet |
|---|---|---|
| styrene/butadiene foam latex of a high solid content (Bunatex SL 3400, Chemische Werke Hüls) | 100 | 150 |
| potassium hydroxide | 0.20 | 2.00 |
| urea | 1.00 | 2.50 |
| disodium-N-alkylsulfosuccinamate(1) | 3.50 | 10.00 |
| tripotassium pyrophosphate (TKPP) | 0.25 | 2.50 |
| polymerized 2,2,4-trimethyl-1,2-dimethyl-quinoline (antioxidant) | 1.00 | 2.00 |
| water | | 12.00 |
| potato starch | 85 | 100 |
| Impermax wax emulsion (Govi, Gent) | 2.03 | 4.50 |
| 1,2-benzisothiazolin-3-one,Na salt (BIT) | 0.04 | 0.20 |
| vulcanization paste D193 GUT (Ditar B.V.) | 5.30 | 10.00 |
| methylcellulose thickener (Methocel, Dow) | 0.03 | 1.00 |
| disodium-N-alkylsulfosuccinamate(2) | 1.75 | 5.00 |
| | 200.10 | 301.70 |

The difference between "wet" and "dry" in the mixture consists of water and, in the case of potato starch, is the water that is retained in the starch granules. The mixture has a solid content of approximately 66%. The mixture was prepared by first adding potassium hydroxide, urea, succinamate soap(1), TKPP, antioxidant and water to the latex and by subsequently distributing the potato starch in the latex with vigorous agitation. After the addition of the wax emulsion, BIT and the vulcanization paste, the mixture was brought to the desired viscosity with methylcellulose. The thus prepared mixture is a commercial product. Immediately before use, 5.00 parts succinamate soap(2) were added and the latex mixture was foamed to 130 g/l. Via the foam table, the foamed mixture was applied in an amount of 270 g (wet) /$m^2$ to needle felt precoated with latex. The thus coated needle felt was dried at a feed-through rate of 10 m/minute and vulcanized in a dying oven having a length of 35 m. In that drying oven, varying air temperatures were employed, lying in the range of 120-180°C. The soap present in the mixture provides a stable foam which during drying vulcanizes to form a non-gel foam backing.

In the thus produced carpet, the potato starch has retained its granular structure almost completely. The bond between the different layers of the carpet is excellent and the carpet possesses a great durability. In particular, it is also well resistant to fungal attack. The ash residue content is considerably lower, whereas the combustion heat is higher than in the case of a comparison carpet with usual inorganic fillers.

In an analogous manner as described above, instead of a non-gel foam backing, a gel foam backing was now formed on needle felt precoated with latex. The mixture used had the same composition as described above, except that a different soap was used, i.e. potassium oleate in an amount of 15.00 parts wet = 3.00 parts dry, which can also be added in two portions of respectively 10.00 and 5.00 parts, and that no potassium hydroxide and TKPP were added. Also, a gelling agent on the basis of sodium silicofluoride (type SNSF, Ditar B.V.) was now injected into the foamed latex mixture in an amount of 3.00 parts (wet) = 0.75 part (dry) per 100 parts of the mixture. This gelling agent acts on the oleate under the influence of infrared heat before the drying and vulcanizing of the foam layer, rendering it insoluble and causing the foam to gel. During subsequent drying, the thus formed gel structure is vulcanized.

The thus produced carpet having a gel foam backing possesses the same good qualities and advantages as pointed out hereinabove in respect of the carpet having a non-gel foam backing. Instead of the above-mentioned gelling agent, the same amount (3 parts wet = 0.75 part dry) of a gelling agent on the basis of ammonium acetate can also be used, i.e. type S293, Ditar B.V. In the case of a gel foam backing, the foam latex used can replaced completely or partly by natural latex.

## Claims

1. A method for manufacturing carpet wherein threads or fibers of a natural or synthetic material are fixedly connected with an underlayer, characterized in that at least one layer forming part of the underlayer is formed from a latex of a natural or synthetic polymer wherein a granular starch product is included, the weight ratio of the granular starch product to the polymer of the latex (calculated on the dry substance) being in the range of 60/100 - 300/100 and the water content being chosen or set such that the weight ratio of the granular starch product to water is 60/100 - 200/100, said latex being foamed by means of a surfactant, and the layer formed from the foamed latex is dried and cured, while the granular structure of the starch product is retained completely or almost completely.

2. A method according to claim 1, characterized in that the weight ratio of the granular starch product to water is chosen or set in the range of 100/100 - 160/100.

3. A method according to claim 1 or 2, characterized in that as a granular starch product, optionally modified potato starch is used.

4. A method according to claims 1-3, characterized in that a swelling inhibitor for the granular starch product is added to the latex before the granular starch product is included therein.

5. A method according to claim 4, characterized in that as a swelling inhibitor, an organic compound or an inorganic salt is used in an amount of at least 1 part by weight per 100 parts by weight granular starch product.

6. A method according to claims 1-5, characterized in that the surfactant contains hydrocarbon residues as hydrophobic residue which do not belong to the group of the linear alkyl residues.

7. A method according to claims 1-6, characterized in that preservatives preventing attack on or decomposition of the granular starch product are included in the latex containing the granular starch product.

8. A method according to claims 1-7, characterized in that the granular starch product forms the total or almost the total amount of filler present in the relevant layer.

9. A latex of a natural or synthetic polymer, suitable for manufacturing carpet underlayers, characterized in that the latex contains a granular starch product and a swelling inhibitor, the weight ratio of the granular starch product to the polymer of the latex (calculated on the dry substance) being in the range of 60/100 - 300/100 and the weight ratio of the granular starch product to water being in the range of 60/100 - 200/100, and the latex also containing a surfactant and optionally perservatives preventing attack on or decomposition of the granular starch product.

10. A granular starch product suitable for being added to a latex for manufacturing carpet underlayers, characterized in that the granular starch product contains a swelling inhibitor in an amount of at least 1 part per 100 parts starch product, and also a surfactant in an amount of at least 0.5 part per 100 parts starch product.

11. A granular starch product according to claim 10, characterized in that the granular starch product also contains preservatives preventing attack on or decomposition of the granular starch product.

12. A carpet containing threads or fibers of a natural and/or synthetic material that are fixedly connected with an underlayer, characterized in that a granular starch product is included as filler in at least one layer forming part of the underlayer and containing a natural or synthetic polymer, the weight ratio of the granular starch product to the natural or synthetic polymer being in the range of 60/100 - 300/100, and the granular starch product forming the total or almost the total amount of filler present in the relevant layer.

**13.** A carpet according to claim 12, characterized in that the layer containing the granular starch product has a foam-shaped structure.

**14.** A carpet according to claim 12 or 13, characterized in that the layer containing the granular starch product also contains preservatives preventing attack on or decomposition of the granular starch product.

**Patentansprüche**

**1.** Verfahren zum Herstellen von Teppich, worin Fäden oder Fasern aus einem natürlichen oder synthetischen Material fest mit einer Unterlage verbunden sind, dadurch gekennzeichnet, daß mindestens eine Schicht, die einen Teil der Unterlage bildet, aus einem Latex aus einem natürlichen oder synthetischen Polymer ausgebildet ist, welches ein granulares Stärkeprodukt enthält, wobei das Gewichtsverhältnis von granularem Stärkeprodukt zu dem Latexpolymeren (auf die Trockensubstanz gerechnet) im Bereich von 60/100 - 300/100 liegt und der Wassergehalt derart gewählt oder eingestellt wird, daß das Gewichtsverhältnis von granularem Stärkeprodukt zu Wasser 60/100 - 200/100 beträgt, der Latex mit einem Schäumungsmittel geschäumt wird und die durch das geschäumte Latex gebildete Schicht getrocknet und gehärtet wird, während die granulare Struktur des Stärkeproduktes vollständig oder fast vollständig erhalten bleibt.

**2.** Verfahren nach Anspruch 1, dadurch gekennzeichnet, daß das Gewichtsverhältnis von granularem Stärkeprodukt zu Wasser so gewählt oder eingestellt wird, daß es im Bereich von 100/100 - 160/100 liegt.

**3.** Verfahren nach Anspruch 1 oder 2, dadurch gekennzeichnet, daß als granulares Stärkeprodukt gegebenenfalls modifizierte Kartoffelstärke verwendet wird.

**4.** Verfahren nach den Ansprüchen 1 bis 3, dadurch gekennzeichnet, daß ein das Aufquellen des granularen Stärkeprodukts hemmendes Mittel zu dem Latex gegeben wird, bevor das granulare Stärkeprodukt zu diesem gegeben wird.

**5.** Verfahren nach Anspruch 4, dadurch gekennzeichnet, daß als das Aufquellen hemmendes Mittel eine organische Verbindung oder ein anorganisches Salz in einer Menge von mindestens einem Gewichtsteil auf 100 Gewichtsteile granulares Stärkeprodukt verwendet wird.

**6.** Verfahren nach den Ansprüchen 1 bis 5, dadurch gekennzeichnet, daß das Schäumungsmittel als hydrophobische Reste Kohlenwasserstoffreste enthält, die nicht zu der Gruppe der linearen Alkylreste gehören.

**7.** Verfahren nach den Ansprüchen 1 bis 6, dadurch gekennzeichnet, daß in dem das granulare Stärkeprodukt enthaltenden Latex Konservierungsstoffe enthalten sind, die einen Angriff auf das granulare Stärkeprodukt oder dessen Zersetzung verhindern.

**8.** Verfahren nach den Ansprüchen 1 bis 7, dadurch gekennzeichnet, daß das granulare Stärkeprodukt die Gesamtmenge oder fast die Gesamtmenge des Füllmaterials ausmacht, das in der jeweiligen Schicht zugegen ist.

**9.** Latex aus einem natürlichen oder synthetischen Polymeren, der zur Herstellung von Teppichunterlagen geeignet ist, dadurch gekennzeichnet, daß der Latex ein granulares Stärkeprodukt und ein quellhemmendes Mittel enthält, das Gewichtsverhältnis von granularem Stärkeprodukt zu dem Latexpolymeren (gerechnet auf die Trockensubstanz) im Bereich von 60/100 - 300/100 und das Gewichtsverhaltnis von granularem Stärkeprodukt zu Wasser im Bereich von 60/100 - 200/100 liegt und der Latex weiterhin ein Schäumungsmittel und gegebenenfalls Konservierungsstoffe enthält, die einen Angriff auf das granulare Stärkeprodukt oder dessen Zersetzung verhindern.

**10.** Granulares Stärkeprodukt, das als Zusatz zu einem Latex zur Herstellung von Teppichunterschichten geeignet ist, dadurch gekennzeichnet, daß das granulare Stärkeprodukt ein quellhinderndes Mittel in einer Menge von mindestens einem Teil auf 100 Teile Stärkeprodukt und weiterhin ein Schäumungsmittel in einer Menge von mindestens 0,5 Teilen auf 100 Teile Stärkeprodukt enthält.

**11.** Granulares Stärkeprodukt nach Anspruch 10, dadurch gekennzeichnet, daß das granulare Stärkeprodukt weiterhin Konservierungsstoffe enthält, die einen Angriff auf das granulare Stärkeprodukt oder dessen Zersetzung verhindern.

**12.** Teppich, der Fäden oder Fasern aus einem natürlichen und/oder synthetischen Material enthält, die fest mit einer Unterlage verbunden sind, dadurch gekennzeichnet, daß in mindestens einer, einen Teil der Unterlage bildenden Schicht ein granulares Stärkeprodukt als Füllstoff sowie ein natürliches oder synthetisches Polymer enthalten ist, das Gewichtsverhältnis von granularem Stärkeprodukt zu dem natürlichen oder synthetischen Polymer im Bereich von 60/100 - 300/100 liegt und das granulare Stärkeprodukt die Gesamtmenge oder fast die Gesamtmenge des in der jeweiligen Schicht vorhandenen Füllmaterials ausmacht.

**13.** Teppich nach Anspruch 12, dadurch gekennzeichnet, daß die das granulare Stärkeprodukt enthaltende Schicht eine aufgeschäumte Struktur aufweist.

**14.** Teppich nach Anspruch 12 oder 13, dadurch gekennzeichnet, daß die das granulare Stärkeprodukt enthaltende Schicht weiterhin Konservierungsmittel enthält, die einen Angriff auf das granulare Stärkeprodukt oder dessen Zersetzung verhindern.

**Revendications**

**1.** Procédé de fabrication d'un tapis, dans lequel des fils ou des fibres d'un matériau naturel ou synthétique sont reliés à demeure à une sous-couche, caractérisé en ce qu'au moins une couche formant partie de la sous-couche est formée d'un latex d'un polymère naturel ou synthétique, dans lequel est incorporé un produit d'amidon granulaire, le rapport en poids du produit d'amidon granulaire au polymère du latex (calculé sur la substance sèche) étant compris dans l'intervalle de 60/100 à 300/100, et la teneur en eau étant choisie ou définie de façon que le rapport en poids du produit d'amidon granulaire à l'eau soit de 60/100 à 200/100, ledit latex étant expansé au moyen d'un tensioactif, et la couche formée à partir du latex expansé est séchée et durcie, tandis que la structure granulaire du produit d'amidon est complètement ou presque complètement conservée.

**2.** Procédé selon la revendication 1, caractérisé en ce que le rapport en poids du produit d'amidon granulaire à l'eau est choisi ou défini dans l'intervalle de 100/100 à 160/100.

**3.** Procédé selon la revendication 1 ou 2, caractérisé en ce qu'on utilise en tant que produit d'amidon granulaire un amidon de pomme de terre éventuellement modifié.

**4.** Procédé selon les revendications 1 à 3, caractérisé en ce qu'on ajoute au latex un inhibiteur de gonflement pour le produit d'amidon granulaire, avant d'y incorporer le produit d'amidon granulaire.

**5.** Procédé selon la revendication 4, caractérisé en ce qu'on utilise en tant qu'inhibiteur de gonflement un composé organique ou un sel minéral en une quantité d'au moins 1 partie en poids pour 100 parties en poids du produit d'amidon granulaire.

**6.** Procédé selon les revendications 1 à 5, caractérisé en ce que le tensioactif contient des résidus hydrocarbonés en tant que résidu hydrophobe, qui n'appartiennent pas au groupe des résidus alkyle linéaire.

**7.** Procédé selon les revendications 1 à 6, caractérisé en ce que des conservateurs, qui empêchent une attaque ou une décomposition du produit d'amidon granulaire, sont incorporés dans le latex contenant le produit d'amidon granulaire.

**8.** Procédé selon les revendications 1 à 7, caractérisé en ce que le produit d'amidon granulaire représente la totalité ou la presque totalité de la charge présente dans la couche considérée.

**9.** Latex d'un polymère naturel ou synthétique, convenant à la fabrication de sous-couches de tapis, caractérisé en ce que le latex contient un produit d'amidon granulaire et un inhibiteur de gonflement, le rapport en poids du produit d'amidon granulaire au polymère du latex (calculé sur la substance sèche) étant compris dans l'intervalle de 60/100 à 300/100, et le rapport en poids du produit d'amidon granulaire à l'eau étant compris dans l'intervalle de 60/100 à 200/100, et le latex contenant aussi un tensioactif et éventuellement des conservateurs pour empêcher une attaque ou une décomposition du produit d'amidon granulaire.

**10.** Produit d'amidon granulaire, pouvant être ajouté à un latex pour fabriquer des sous-couches de tapis, caractérisé en ce que le produit d'amidon granulaire contient un inhibiteur de gonflement en une quantité d'au moins 1 partie pour 100 parties du produit d'amidon, et aussi un tensioactif en une quantité d'au moins 0,5 partie pour 100 parties du produit d'amidon.

11. Produit d'amidon granulaire selon la revendication 10, caractérisé en ce que le produit d'amidon granulaire contient aussi des conservateurs qui empêchent une attaque ou une décomposition du produit d'amidon granulaire.

12. Tapis contenant des fils ou des fibres d'un matériau naturel et/ou synthétique, qui sont reliés à demeure à une sous-couche, caractérisé en ce qu'un produit d'amidon granulaire est incorporé en tant que charge dans au moins une couche formant partie de la sous-couche et contenant un polymère naturel ou synthétique, le rapport en poids du produit d'amidon granulaire au polymère naturel ou synthétique étant compris dans l'intervalle de 60/100 à 300/100, et le produit d'amidon granulaire formant la totalité ou la presque totalité de la charge présente dans la couche considérée.

13. Tapis selon la revendication 12, caractérisé en ce que la couche contenant le produit d'amidon granulaire a une structure en forme de mousse.

14. Tapis selon la revendication 12 ou 13, caractérisé en ce que la couche contenant le produit d'amidon granulaire contient aussi des conservateurs qui empêchent une attaque ou une décomposition du produit d'amidon granulaire.